Europäisches Patentamt

European Patent Office

Office européen des brevets

(11) Veröffentlichungsnummer: **0 406 156 A1**

(12) # EUROPÄISCHE PATENTANMELDUNG

(21) Anmeldenummer: **90710015.0**

(22) Anmeldetag: **21.06.90**

(51) Int. Cl.5: **A61C 13/265**

(30) Priorität: **30.06.89 DE 8908010 U**

(43) Veröffentlichungstag der Anmeldung:
**02.01.91 Patentblatt 91/01**

(84) Benannte Vertragsstaaten:
**BE CH DE ES FR GB IT LI NL SE**

(71) Anmelder: **Nova-Pro Attachment GmbH**
**Reingsen 25**
**D-5840 Schwerte(DE)**

(72) Erfinder: **Brügmann, A. Dirk**
**Dorf Reingsen**
**D-5840 Schwerte(DE)**

(74) Vertreter: **Hassler, Werner, Dr.**
**Postfach 17 04 Asenberg 62**
**D-5880 Lüdenscheid(DE)**

(54) **Zahnprothesengeschiebe.**

(57) Ein Zahnprothesengeschiebe löst das technische Problem einer Verbesserung der Führungsgenauigkeit des Zahnprothesengeschiebes und eine Vereinfachung der Einstellung der Friktion mit einer Matrize (3) und einer Patrize, deren Aufnahme (1) in einer Aufnahmeschiene (4) ein austauschbares Patrizenhauptteil (2) aufnimmt, das mit einer Sicherungsschraube (19) in ein Loch (8) der Aufnahme (2) und mit einem Geschiebeprofil (13) in eine Führungsschiene (9) der Matrize (3) eingreift, wobei das gesmate Patrizenhauptteil (2) aus einem rückstellfähigen, zähen, abriebbeständigen Kunststoff besteht, die Aufnahme (1) der Patrize und die Matrize (3) als Gußteile ausgebildet sind, das Aufnahmeprofil (12) und das Führungsprofil (13) einen ovalförmigen Querschnitt haben und durch einen Stegteil (15) miteinander verbunden sind, wobei ferner durch den Stegteil (15) eine Querbohrung (16) zur Aufnahme der Sicherungsschraube (19) reicht und die Querbohrung (16) im Bereich des Führungsprofils (13) eine konische Erweiterung (17) aufweist.

Fig. 1

EP 0 406 156 A1

## ZAHNPROTHESENGESCHIEBE

Die Erfindung betrifft ein Zahnprothesengeschiebe.

Ein derartiges Zahnprothesengeschiebe ist aus der EP-A1- 0 254 027 bekannt.

Aufgabe der Erfindung ist eine Verbesserung der Führungsgenauigkeit des Zahnprothesengeschiebes und eine Vereinfachung der Einstellung der Friktion.

Diese Aufgabe wird nach der Erfindung gelöst durch ein Zahnprothesengeschiebe mit einer Matrize und einer Patrize, deren Aufnahme in einer Aufnahmeschiene ein austauschbares Patrizenhauptteil aufnimmt, das mit einer Sicherungsschraube in ein Loch der Aufnahme und mit einem Geschiebeprofil in eine Führungsschiene der Matrize eingreift, wobei das gesmate Patrizenhauptteil aus einem rückstellfähigen, zähen, abriebbeständigen Kunststoff besteht, die Aufnahme der Patrize und die Matrize als Gußteile ausgebildet sind, das Aufnahmeprofil und das Führungsprofil einen ovalförmigen Querschnitt haben und durch einen Stegteil miteinander verbunden sind, wobei ferner durch den Stegteil eine Querbohrung zur Aufnahme der Sicherungsschraube reicht und die Querbohrung im Bereich des Führungsprofils eine konische Erweiterung aufweist.

Die Erfindung unterscheidet sich insofern vom Stand der Technik, als das Patrizenhauptteil führungsgenau und austauschbar ausgebildet ist. Das Patrizenhauptteil selbst ermöglicht auch eine Einstellung der Friktion.

Damit eine definierte Einstellung der Friktion möglich ist, sieht die Erfindung vor, daß von der konischen Erweiterung radiale Spalte in Längsrichtung des Führungsprofils ausgehen.

Eine besonders einfache Handhabung wird dadurch gewährleistet, daß eine gemeinsame Schraube mit konischem Kopf sowohl als Sicherungsschraube als auch als Friktionseinstellschraube vorgesehen ist.

Eine verbesserte Anpaßbarkeit wird dadurch gewährleistet, daß die Querbohrung einerseits eine Sicherungsschraube und andererseits eine konische Friktionseinstellschraube aufnimmt.

Eine sichere Einbindung in den Restgebißaufbau wird dadurch sichergestellt, daß die Matrize durch eine Querwand senkrecht zur Einschubrichtung abgeschlossen ist.

Die Gebißherstellung wird dadurch mit hoher Genauigkeit ermöglicht, daß die Aufnahme und die Matrize als Gußmodell aus einem rückstandfrei verbrennbaren Kunststoff vorgeformt sind.

Ausführungsformen der Erfindung werden im folgenden unter Bezugnahme auf die anliegenden Zeichnungen erläutert, in denen darstellen:

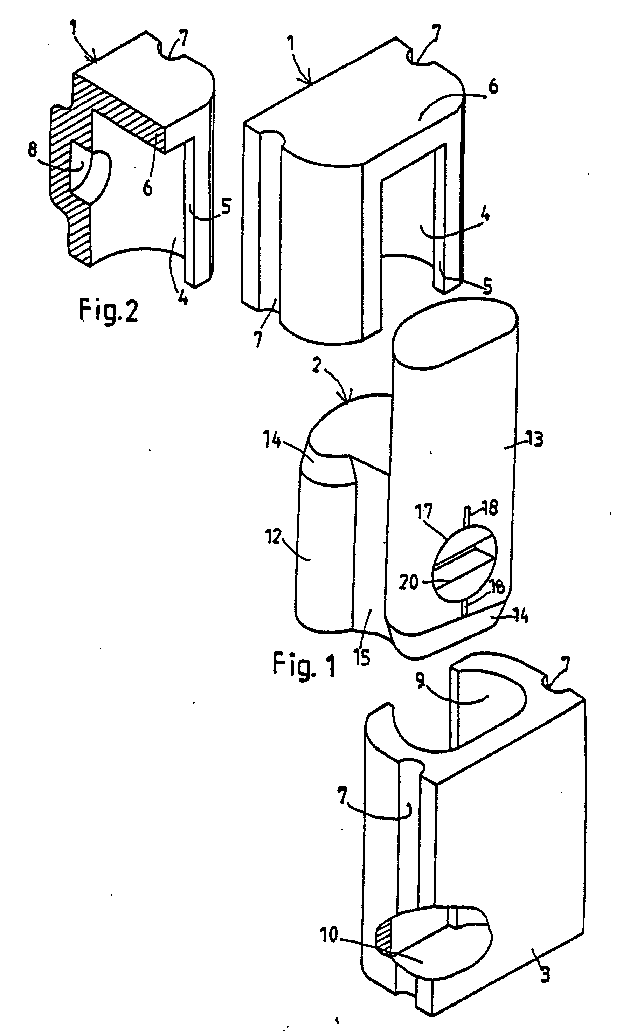

Fig. 1 eine auseinandergezogene perspektivische Gesamtansicht des Zahnprothesengeschiebes,

Fig. 2 eine aufgeschnittene Ansicht der Aufnahme der Patrize,

Fig. 3 einen Schnitt durch das Patrizenhauptteil in Geschiebelängsrichtung,

Fig. 4 einen entsprechenden Schnitt senkrecht zur Geschiebelängsrichtung und

Fig. 5 einen Schnitt durch ein abgewandeltes Patrizenhauptteil.

Das Zahnprothesengeschiebe umfaßt eine Aufnahme 1 für ein Patrizenhauptteil 2 und eine Matrize 3. Es sind hier die Gußmodelle für die Aufnahme 1 und die Matrize 3 dargestellt, die aus einem rückstandfrei verbrennbaren Kunststoff bestehen. Diese Kunststoffe sind spritzfähig, so daß die Aufnahme 1 und die Matrize 3 mit hoher Genauigkeit als Spritzgießteil ausgebildet sein können.

Die Aufnahme 1 hat in Geschieberichtung eine Aufnahmeschiene 4 mit im wesentlichen ovalförmigem Querschnitt, die einseitig durch ein Fenster 5 zugänglich ist. Die Aufnahme 1 ist durch eine Querwandung 6 abgeschlossen. Außerdem sind an der Aufnahme 1 Nuten 7 vorhanden, die eine sichere Einbettung in das Wachsmodell des Prothesenaufbaus ermöglichen. Das Gußmodell der Aufnahme 1 wird bei der Herstellung der Prothese in das Gesamtgußmodell genau eingebettet und vor dem Guß zusammen mit dem Wachsmodell ausgebrannt. Die gesamte Form einschließlich des Gußmodells der Aufnahme 1 füllt sich dann mit dem Gußwerkstoff, normalerweise einem Edelmetall. Infolgedessen ist die Aufnahme 1 der Patrize in dem Prothesengerüst genau nachgebildet. Quer zur Achse des Aufnahmeprofils 4 ist in der Rückwand der Aufnahme 1 ein Sackloch 8 ausgebildet, dessen Zweck noch später erläutert wird.

Die Matrize 3 besteht ebenfalls aus einem rückstandfrei verbrennbaren Kunststoff und ist entsprechend ausgebildet. Sie hat eine Führungsschiene 9 mit ovalförmigen Querschnitt, eine Abschlußwand 10, die die Führungsschiene 9 in Einschubrichtung abschließt und Nuten 11 zur Verankerung in dem Wachsmodell des Restgebißaufbaus.

Das Patrizenhauptteil 2 weist zwei Profile auf, einmal ein Aufnahmeprofil, das in die Aufnahmeschiene 4 paßt, und ein Geschiebeprofil 13, das in die Führungsschiene 9 der Matrize 3 paßt. Das Aufnahmeprofil 12 und das Geschiebeprofil 13 haben jeweils einen etwa ovalförmigen Querschnitt. Die jeweils in Einschubrichtung gelegenen Stirnkanten der Profile weisen eine Konusfläche 14 auf, um das Einschieben zu erleichtern. Das Aufnahmeprofil 12 und das Geschiebeprofil 13 sind durch einen Steg 15 miteinander verbunden. Die Länge der Profile kann unterschiedlich sein. Insbesondere kann das Geschiebeprofil 13 eine große Länge haben und über die gesamte Höhe des Restgebißaufbaus reichen, damit man ein hohes Festhaltemoment sicherstellt.

Innerhalb des Steges befindet sich eine Querbohrung 16 mit einem Innengewinde. Im Mündungsbereich dieser Querbohrung 16 innerhalb des Geschiebeprofils 13 weist die Querbohrung eine konische Erweiterung 17 auf, von der Schlitze 18 innerhalb einer Radialebene in der Längsachse des Geschiebes bzw. des Geschiebeprofils 13 ausgehen.

Das Patrizenhauptteil 2 besteht aus einem rückstellfähigen, zähen, abriebbeständigen Kunststoff, z. B. einem Polyamid, Polycarbonat oder dergleichen. Dieser Kunststoff läßt sich mit hoher Genauigkeit und Formhaltigkeit durch Spritzgießen formen. Das Patrizenhauptteil 2 ist innerhalb der Aufnahme 1 austauschbar.

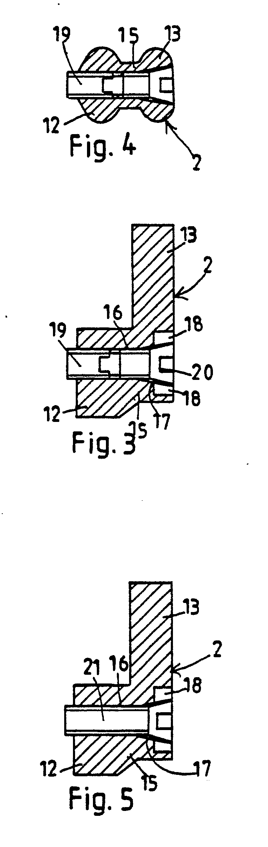

Die Querbohrung 16 nimmt entweder eine oder zwei Schrauben auf. Nach den Fig. 3 und 4 ist eine Sicherungsschraube 19 vorgesehen, die als Gewindestift dargestellt ist und die mit ihrem Fußteil in das Sackloch 8 eingreift und dadurch das Patrizenhauptteil 2 nach dem Einschieben in die Aufnahmeschiene 4 gegen Verschiebungen sichert. Außerdem ist eine Friktionseinstellschraube 20 mit einem konischen Kopf vorgesehen. Im Maße des Einschraubens dieser Friktionseinstellschraube 20 weitet der konische Kopf die konische Erweiterung 27 auf und verformt dadurch das Geschiebeprofil 13 in Querrichtung. Die Schlitze 18 erleichtern diese Verformung. Dadurch kann man die Friktion des Geschiebeprofils 13 und damit des gesamten Zahnprothesengeschiebes genau und feinfühlig einstellen bzw. nachstellen.

Fig. 5 zeigt eine abgewandelte Ausführungsform mit einer gemeinsamen Schraube 21, die sowohl Sicherungsschraube als auch Friktionseinstellschraube ist. Die Funktion und Arbeitsweise dieser Schraube 21 ergibt sich aus Fig. 5.

Die Aufnahme 1 und die Matrize 3 sind als Gußmodelle ausgebildet und werden einerseits in das Modell des Prothesengerüsts bzw. in das Modell des Restgebißaufbaus eingeformt. Beim Guß werden diese Gußmodelle durch den Gußwerkstoff, insbesondere ein Edelmetall, formgetreu nachgebildet.

Das Patrizenhauptteil 2 wird in die Aufnahme 1 des Prothesengerüsts eingesetzt und dort durch die Sicherungsschraube 19 bzw. die Schraube 21 gesichert. Die Friktion des Geschiebeprofils 13 läßt sich in der beschriebenen Weise einstellen. Das Geschiebeprofil 13 kann paßgenau in die Führungsschiene 9 der Matrize 3 eingeführt werden.

Die Friktion des Geschiebeprofils 13 läßt sich jederzeit nachstellen. Ebenso ist das Patrizenhauptteil jederzeit austauschbar. Das Patrizenhauptteil 2 unterliegt hauptsächlich dem Verschleiß, so daß der mögliche Austausch außerordentlich vorteilhaft ist. Dadurch lassen sich größere Reparaturen der Zahnprothese vermeiden.

**Ansprüche**

1. Zahnprothesengeschiebe mit einer Matrize (3) und einer Patrize, deren Aufnahme (1) in einer Aufnahmeschiene (4) ein austauschbares Patrizenhauptteil (2) aufnimmt, das mit einer Sicherungsschraube (19) in ein Loch (8) der Aufnahme (2) und mit einem Geschiebeprofil (13) in eine Führungsschiene (9) der Matrize (3) eingreift) wobei das gesmate Patrizenhauptteil (2) aus einem rückstellfähigen, zähen, abriebbeständigen Kunststoff besteht, die Aufnahme (1) der Patrize und die Matrize (3) als Gußteile ausgebildet sind, das Aufnahmeprofil (12) und das Führungsprofil (13) einen ovalförmigen Querschnitt haben und durch einen Stegteil (15) miteinander verbunden sind, wobei ferner durch den Stegteil (15) eine Querbohrung (16) zur Aufnahme der Sicherungsschraube (19) reicht und die Querbohrung (16) im Bereich des Führungsprofils (13) eine konische Erweiterung (17) aufweist.

2. Zahnprothesengeschiebe nach Anspruch 1, dadurch gekennzeichnet, daß von der konischen Erweiterung (17) radiale Spalte (18) in Längsrichtung des Führungsprofils ausgehen.

3. Zahnprothesengeschiebe nach Anspruch 1 oder 2, dadurch gekennzeichnet, daß eine gemeinsame Schraube (21) mit konischem Kopf sowohl als Sicherungsschraube als auch als Friktionseinstellschraube vorgesehen ist.

4. Zahnprothesengeschiebe nach einem der Ansprüche 1 bis 3, dadurch gekennzeichnet, daß die Querbohrung (16) einerseits eine Sicherungsschraube (19) und andererseits eine konische Friktionseinstellschraube (20) aufnimmt.

5. Zahnprothesengeschiebe nach einem der Ansprüche 1 bis 4, dadurch gekennzeichnet, daß die Matrize (3) durch eine Querwand (10) senkrecht zur Einschubrichtung abgeschlossen ist.

6. Zahnprothesengeschiebe nach einem der Ansprüche 1 bis 5, dadurch gekennzeichnet, daß die Aufnahme (1) und die Matrize (3) als Gußmodell aus einem rückstandfrei verbrennbaren Kunststoff geformt sind.

Fig.2

Fig. 1

Fig. 4

Fig. 3

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 710 446 (POVEROMO)<br>* Beschreibung; Figuren *<br>--- | 1,2,5 | A 61 C 13/265 |
| A | EP-A-0 166 311 (CENDRES et METAUX)<br>* Seite 4, Zeilen 3-9; Figuren *<br>--- | 1,6 | |
| A | EP-A-0 085 781 (PEDRAZZINI)<br>* Beschreibung; Figuren *<br>----- | 1 | |

|  |
|---|
| **RECHERCHIERTE SACHGEBIETE (Int. Cl.5)** |
| A 61 C |

Der vorliegende Recherchenbericht wurde für alle Patentansprüche erstellt

| Recherchenort | Abschlußdatum der Recherche | Prüfer |
|---|---|---|
| DEN HAAG | 09-10-1990 | VANRUNXT J.M.A. |